# EUROPÄISCHE PATENTSCHRIFT

(11) **EP 2 295 842 B1**
(45) Veröffentlichungstag und Bekanntmachung des Hinweises auf die Patenterteilung: **12.03.2014**
(21) Anmeldenummer: 10009301.2
(22) Anmeldetag: 07.09.2010
(51) Int. Cl.: F16L 33/22, F16L 47/04, F16L 37/10

(54) **Rohverbinder zum dichten Verbinden an ein Rohrende eines Rohres aus nachgiebigem Werkstoff**
Pipe connector for sealed connection to an end of a tube made of resilient material
Raccord de tuyau destiné à raccorder de manière étanche une extrémité d'un tuyau en matière flexible

(30) Priorität: 10.09.2009 DE 102009040822
(43) Veröffentlichungstag der Anmeldung: 16.03.2011
(73) Patentinhaber: Viega GmbH & Co. KG, 57439 Attendorn (DE)
(72) Erfinder: Schröder, Klaus, 57439 Attendom (DE); Hofmann, Frank, 57439 Attendom (DE); Sinoplu, Sudi, 57439 Attendom (DE)
(74) Vertreter: Rox, Thomas

(56) Entgegenhaltungen:
- EP-A1- 0 118 656
- EP-A1- 1 288 554
- WO-A1-98/14729
- DE-A1- 1 475 752
- DE-U- 1 858 811

## Beschreibung

Die Erfindung betrifft einen Rohrverbinder zum dichten Verbinden an ein Rohrende eines Rohres aus nachgiebigem Werkstoff, insbesondere eines Kunststoffrohres, mit einem eine Aufnahme für ein Rohrende aufweisenden Grundkörper und mit einem separaten Aktuatorelement, wobei der Grundkörper im Bereich der Aufnahme Fixierungsmittel zur Fixierung des Rohrendes in Längsrichtung aufweist, wobei das Aktuatorelement mindestens drei Positionen relativ zum Grundkörper einnehmen kann, wobei die Fixierungsmittel in der ersten Position des Aktuatorelements eine Längsbewegung des Rohrendes ermöglichen und wobei die Fixierungsmittel in der zweiten und dritten Position des Aktuatorelements das Rohrende in Längsrichtung fixieren, wobei eine separate, im Grundkörper angeordnete Stützhülse vorgesehen ist, wobei die Stützhülse Pressmittel zur Verpressung mit dem Rohrende aufweist, wobei die Pressmittel in der ersten und zweiten Position des Aktuatorelements unverpresst sind und wobei die Pressmittel in der dritten Position des Aktuatorelements mit dem Rohrende verpresst sind. Die Erfindung betrifft auch ein System aus einem Rohrverbinder und einem Rohr, ein Verfahren zum Verbinden eines Rohrverbinders mit einem Rohr sowie eine Verwendung des Rohrverbinders.

Die Verbindung von Rohren, insbesondere Kunststoffrohren, wird im erdverlegten Rohrleitungsbau durch die großen Rohrdurchmesser von typischerweise 63 mm bis 225 mm oder mehr, insbesondere von 90 mm bis 160 mm, und durch die. beengten Platzverhältnisse erschwert. Im Stand der Technik werden zur Verbindung daher spezielle Schweißverfahren wie das Stumpf- oder Elektromuffenschweißen eingesetzt, welche ein Arbeiten auch unter beengten Platzverhältnissen erlauben. Diese Verfahren haben jedoch den Nachteil, dass sie einen hohen Zeit- und Maschinenaufwand sowie speziell geschultes Personal erfordern. Die Durchführung dieser Verfahren ist daher mit hohen Kosten verbunden.

Bei geringeren Rohrdurchmessern und weniger beengten Platzverhältnissen, beispielsweise bei Rohrleitungen in der Hausinstallation, sind alternative Verbindungen wie Press-und Klemmverbindungen bekannt. So offenbart die EP 0 118 656 A1 einen als Kupplungsvorrichtung ausgebildeten Rohrverbinder für das druckdichte und lösbare Verbinden von Rohren, bei dem das Rohr in einen Grundkörper eingeführt und dann von außen verklemmt und mit einer Dichtung abgedichtet wird.

Dieser Rohrverbinder ist jedoch bei großen Rohrdurchmessern nachteilig, da das in den Grundkörper eingeführte Rohrende durch die beim Verklemmen auftretenden Kräfte verkanten oder teilweise aus dem Grundkörper herausgleiten kann. Darüber hinaus kann das Rohr durch die großen auftretenden Kräfte deformiert werden, so dass die Dichtheit der Verbindung des Rohrverbinders mit dem Rohr nicht gewährleistet ist.

Die DE 1 475 752 A1, EP 1 288 554 A1 und DE 1 858 811 U offenbaren Rohrkupplungen zum Verbinden von Rohren aus einem nachgiebigen Werkstoff mit den Merkmalen des Oberbegriffes von Anspruch 1. Diesen Kupplungen ist gemeinsam, dass zunächst das Rohr in einem ersten Schritt gegenüber einer Überwurfmutter fixiert wird und dass im zweiten Schritt das Rohr zusammen mit der Überwurfmutter auf die Stützhülse aufgeschoben wird. Dabei wird also das Rohr gegenüber der Rohrkupplung auch im zweiten Schritt bewegt, so dass sich weiterhin das Problem des Verklemmens und Verkantens des Rohres ergibt.

Der vorliegenden Erfindung liegt daher die technische Aufgabe zu Grunde, einen Rohrverbinder und ein System aus einem Rohrverbinder mit einem Rohr sowie ein Verfahren zum Verbinden eines Rohrverbinders mit einem Rohr zur Verfügung zu stellen, der die Nachteile aus dem Stand der Technik vermeidet.

Diese Aufgabe wird bei einem gattungsgemäßen Rohrverbinder erfindungsgemäß durch die Merkmale des kennzeichnenden Teils des Anspruchs 1 gelöst.

Bei der Verbindung des Rohrverbinders an ein Rohrende kann das Rohrende in einem ersten Schritt durch eine Bewegung des Aktuatorelements von der ersten in die zweite Position zunächst in Längsrichtung fixiert werden, so dass das Rohrende nicht in dem Grundkörper verkanten oder aus dem Grundkörper herausgleiten kann. Erst im zweiten Schritt werden die Pressmittel dann bei der Bewegung des Aktuatorelements von der zweiten in die dritte Position mit dem Rohrende verpresst, so dass eine dichte Verbindung zwischen dem Rohrende und dem Rohrverbinder hergestellt wird.

Unter der Längsrichtung wird eine zu der Richtung, in der das Rohr in die Aufnahme eingeführt wird, parallele Richtung verstanden.

Es ist erkannt worden, dass durch eine Ausgestaltung des Rohrverbinders, die eine separate Fixierung und Verpressung des Rohrendes erlaubt, die Installation einer Rohrverbindung, insbesondere bei großen Rohrdurchmessern, erheblich vereinfacht und sicherer gestaltet werden kann. Insbesondere ist die Handhabung des Rohrverbinders einfach, so dass keine besondere Schulung der Verwender erforderlich ist. Die Montage kann mit üblichen Pressmaschinen für Pressverbindungen durchgeführt werden und erfordert nur einen geringen Zeitaufwand. Weiterhin ist vor der Verbindung keine Oberflächenbehandlung des Rohres erforderlich.

Erfindungsgemäß sind die Stützhülse und/oder das Aktuatorelement so ausgebildet, dass bei einer Bewegung des Aktuatorelements von der zweiten in die dritte Position die Stützhülse gegenüber dem Grundkörper in das Rohrende hinein bewegt wird. Dadurch kann die Stützhülse mit dem Rohrende auf einfache Weise an der inneren Oberfläche des Rohrendes verpresst werden. Die Pressmittel sind bevorzugt an der Außenseite der Stützhülse angeordnet.

Weiterhin erleichtert die zurückgezogene Position der Stützhülse, wenn sich das Aktuatorelement in der ersten oder zweiten Position befindet, das Einführen des Rohrendes in den Grundkörper und das Fixieren des Rohrendes.

Durch die Stützhülse wird zudem erreicht, dass das Rohrende von Innen abgestützt und so eine Deformation des Rohrendes, welche zur Undichtigkeit der Verbindung führen könnte, verhindert wird. Unter einer Deformation wird eine derartige Formänderung des Rohrendes, beispielsweise eine Abweichung vom runden Querschnitt, verstanden, die zu Undichtigkeiten führen kann.

Das Aktuatorelement ist in einer weiteren bevorzugten Ausführungsform des Rohrverbinders als axial bewegbarer, im Sinne von drehbarer Spannring ausgebildet. Auf diese Weise wird eine einfache und kompakte Bauweise des Rohrverbinders erreicht. Die drei Positionen des Aktuatorelements entsprechen so drei Winkeleinstellungen des Spannrings relativ zum Grundkörper.

Eine einfache mechanische Verpressbarkeit der Stützhülse mit dem Rohrende wird in einer weiteren bevorzugten Ausführungsform dadurch erreicht, dass der Spannring einen ersten Bereich aufweist und die Stützhülse einen dazu korrespondierenden zweiten Bereich aufweist, wobei einer dieser Bereiche eine zumindest abschnittsweise schräg zur axialen Richtung verlaufende Kontur aufweist und der andere Bereich eine mit der Kontur in Kontakt stehende Nase aufweist. Wenn die Nase an der Stützhülse und die Kontur an dem Spannring angeordnet ist, so gleitet die Nase bei einer Bewegung des Spannrings von der zweiten in die dritte Position an der Kontur entlang und führt eine Bewegung mit einer Komponente in Längsrichtung aus. Dadurch wird die Stützhülse ebenfalls in Richtung der Aufnahme des Grundkörpers bewegt. Alternativ kann die Kontur auch an der Stützhülse und die Nase an dem Spannring angeordnet sein. In diesem Fall gleitet die Kontur bei einer Bewegung des Spannrings von der zweiten in die dritte Position an der Nase entlang und führt eine Bewegung mit einer Komponente in Längsrichtung aus, so dass die Stützhülse in Richtung der Aufnahme des Grundkörpers bewegt wird.

In einer weiteren Ausführungsform des Rohrverbinders weist der Spannring auf der dem Grundkörper zugewandten Seite Nocken auf, welche bei einer Bewegung des Spannrings von der ersten in die zweite Position so mit den Fixierungsmitteln zusammen wirken, dass die Fixierungsmittel aktiviert werden. Unter Nocken werden vorstehende Bereiche des Spannrings verstanden, durch welche der Innenquerschnitt des Spannrings lokal verjüngt wird. Die Nocken weisen bevorzugt in axialer Richtung zumindest auf einer Seite eine Schräge auf, so dass sich der lokale Innenquerschnitt des Spannrings auf dieser Seite stetig verjüngt. Die Nocken stellen einfache mechanische Mittel dar, mit denen die Fixierungsmittel aktiviert werden können. Der Grundkörper weist bevorzugt in dem Winkelbereich, in dem sich die Nocken in der zweiten und dritten Position des Spannrings befinden, Aktivierungsmittel auf, welche bei einer Kompression durch die Nocken zu einer Fixierung des Rohres führen.

Die Fixierungsmittel des Grundkörpers sind in einer weiteren bevorzugten Ausführungsform des Rohrverbinders als Fixierring, vorzugsweise mit Verzahnungen, ausgebildet. Unter einem Fixierring wird ein Ring verstanden, dessen Querschnitt durch eine von außen wirkende Kraft komprimiert werden kann. Bevorzugt weist der Fixierring dazu mindestens eine Auslassung in axialer Richtung auf. Wird auf den Fixierring durch das Aktuatorelement, beispielsweise durch die Nocken eines Spannrings, von außen eine Kraft ausgeübt, so reduziert sich der Querschnitt des Fixierrings und fixiert dadurch das von ihm umgriffene Rohrende kraft- und/oder formschlüssig. Der Fixierring weist auf seiner Innenseite bevorzugt Verzahnungen auf, durch welche die Fixierung des Rohrendes verstärkt werden kann.

Eine einfache und sichere Verpressung der Stützhülse mit dem Rohrende wird in einer weiteren Ausführungsform des Rohrverbinders dadurch erreicht, dass die Pressmittel als zumindest abschnittsweise Querschnittserweiterung der Stützhülse ausgebildet sind, wobei der Querschnitt bevorzugt von der distalen Seite zur proximalen Seite der Stützhülse stetig zunimmt. Unter der distalen Seite wird die der Aufnahme des Grundkörpers zugewandte Seite der Stützhülse und unter der proximalen Seite die der Aufnahme des Grundkörpers abgewandte Seite der Stützhülse verstanden. Die abschnittsweise Querschnittserweiterung weist einen größeren Querschnitt auf, als der Innenquerschnitt des zu verpressenden Rohres. Dadurch wird der Querschnitt der Innenseite des Rohrendes durch das Hineinbewegen der Stützhülse teilweise aufgeweitet und mit dieser verpresst. Besonders bevorzugt ist die abschnittsweise Querschnittserweiterung der Stützhülse so groß bemessen, dass diese beim Verpressen mit dem Rohr auch zu einer Aufweitung der Außenseite des Rohrendes und so zu einer zusätzlichen kraft- und/oder formschlüssigen Verbindung des Rohres mit dem Grundkörper, insbesondere mit den Fixierungsmitteln, und/oder zu einer Verstärkung der Fixierung führt. Durch die stetige Zunahme des Querschnitts von der distalen zur proximalen Seite der Stützhülse wird das Verpressen mit dem Rohrende erleichtert. Für eine besonders sichere Verpressung ist die Abnahme des Querschnitts auf der proximalen Seite der Stützhülse bevorzugt steil ausgebildet.

In einer weiteren Ausführungsform des Rohrverbinders weisen der Grundkörper und das Aktuatorelement Ansätze für ein Presswerkzeug auf. Auf diese Weise kann die Bewegung des Aktuatorelements von der ersten in die zweite und/oder von der zweiten in die dritte Position durch gewöhnliche Presswerkzeuge erfolgen. Dadurch wird die Montage des Rohrverbinders erleichtert, während gleichzeitig nur ein geringer Maschinenaufwand erforderlich ist.

Die technische Aufgabe wird auch durch ein System mit einem Rohrverbinder nach einem der Ansprüche 1 bis 9 und einem zu dem Rohrverbinder korrespondierenden Rohr gelöst. Unter einem korrespondierenden Rohr wird ein Rohr verstanden, welches in seinem Querschnitt an den Rohrverbinder angepasst ist.

Die technische Aufgabe wird weiterhin auch durch ein Verfahren zum Verbinden eines Rohrverbinders, vorzugsweise eines erfindungsgemäßen Rohrverbinders, an ein Rohr gelöst, bei dem das Rohr zunächst in den Rohrverbinder eingeführt wird, bei dem ein am Rohrverbinder vorgesehenes Aktuatorelement von einer ersten in eine zweite Position bewegt und das Rohr dadurch im Rohrverbinder in Längsrichtung fixiert wird und bei dem das Aktuatorelement danach von der zweiten in eine dritte Position bewegt und dadurch das Rohr durch eine Stützhülse mit Pressmitteln im Rohrverbinder verpresst wird, wobei bei einer Bewegung des Aktuatorelements von der zweiten in die dritte Position die Stützhülse gegenüber dem Rohrverbinder in das Rohrende hinein bewegt wird. Es ist erkannt worden, dass durch eine Trennung der Verfahrensschritte des Fixierens und des Verpressens eine einfache, sichere und schnelle Verpressung auch für Rohre mit großem Querschnitt gewährleistet werden kann. Für weitere Vorteile des Verfahrens wird auf die Beschreibung der Ausführungsformen des Rohrverbinders verwiesen.

Die technische Aufgabe wird schließlich auch durch eine Verwendung eines erfindungsgemäßen Rohrverbinders im erdverlegten Rohrleitungsbau, insbesondere für Kaltwasser-und/oder Gas-Leitungen, gelöst. Aufgrund der konstruktiven Trennung von Fixierung und Verpressung des Rohrendes ist der erfindungsgemäße Rohrverbinder besonders für den Einsatz im erdverlegten Rohrleitungsbau geeignet, da er einerseits eine einfache, sichere und schnelle Montage bei Rohren mit großem Durchmesser gewährleistet und andererseits auch bei beengten Platzverhältnissen mit geringem Maschinenaufwand einsetzbar ist.

Weitere Merkmale und Vorteile der vorliegenden Erfindung können der folgenden Beschreibung zweier Ausführungsbeispiele entnommen werden, wobei auf die beigefügte Zeichnung Bezug genommen wird.

In der Zeichnung zeigen
- Fig. 1: ein Ausführungsbeispiel des erfindungsgemäßen Rohrverbinders mit einem in erster Position angeordneten Aktuatorelement,
- Fig. 2: das Ausführungsbeispiel aus Fig. 1 mit einem in zweiter Position angeordneten Aktuatorelement,
- Fig. 3: das Ausführungsbeispiel aus Fig. 1 mit einem in dritter Position angeordneten Aktuatorelement und
- Fig. 4: ein zweites Ausführungsbeispiel eines erfindungsgemäßen Rohrverbinders.

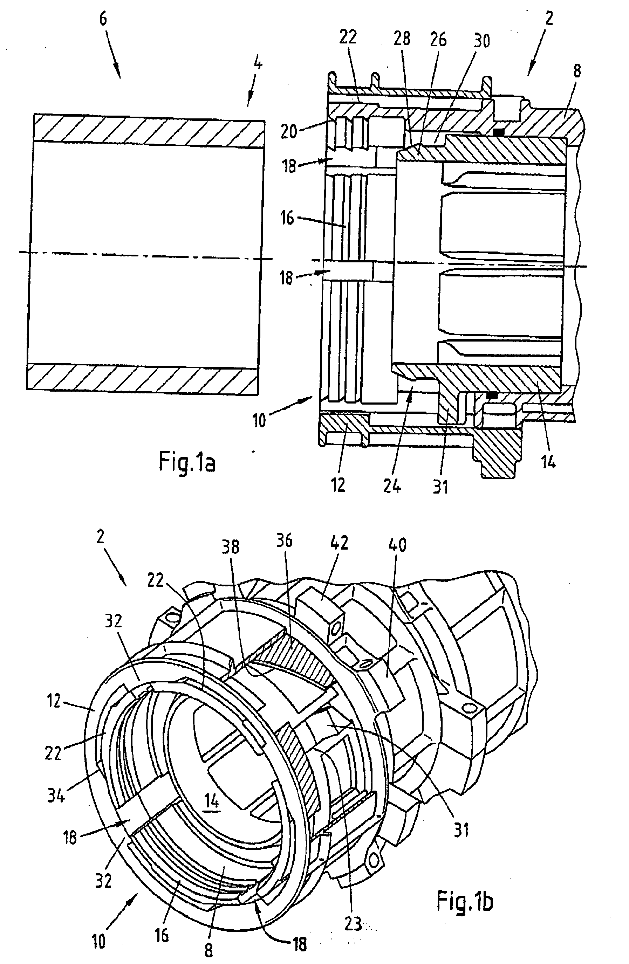

Fig. 1 zeigt ein Ausführungsbeispiel des erfindungsgemäßen Rohrverbinders. In Fig. 1a sind der Rohrverbinder 2 und ein Rohrende 4 eines Rohres 6 im Querschnitt gezeigt. Fig. 1b zeigt den Rohrverbinder 2 in perspektivischer Ansicht. Das Rohr 6 besteht beispielsweise aus einem Kunststoff, wie zum Beispiel Polyethylen (PE), Polybuthen (PB), Polyvinylchlorid (PVC), Polypropylen (PP) oder einem Polyamid (PA), und weist einen Durchmesser von beispielsweise 63 mm bis 225 mm oder mehr, insbesondere von 90 mm bis 160 mm, auf. Der Rohrverbinder 2 weist einen Grundkörper 8 mit einer Aufnahme 10 für das Rohrende 4, ein als Spannring 12 ausgebildetes Aktuatorelement und eine im Grundkörper 8 angeordnete Stützhülse 14 auf. Das Rohr 6 kann auch als Mehrschicht-Verbundrohr, insbesondere mit einer Metallverstarkung, ausgebildet sein.

Der Querschnitt des Grundkörpers 8 ist im Bereich der Aufnahme 10 größer als der Außenquerschnitt des Rohres 6 ausgebildet, so dass das Rohr 6 einfach in den Grundköper 8 eingeführt werden kann. Der Grundkörper 8 weist einen Fixierring 16 als Fixierungsmittel auf. Der Fixierring 16 zeigt in axialer Richtung mehrere Auslassungen 18, so dass der Querschnitt des Fixierrings 16 durch eine von außen wirkende Kraft reduziert werden kann. Auf der Innenseite des Fixierrings 16 sind Verzahnungen 20 und auf seiner Außenseite Erhebungen 22 angeordnet. Der Grundkörper 8 weist weiterhin noch einen in Längsrichtung weisenden Führungsbereich 23 auf.

Die Stützhülse 14 ist im Grundkörper 8 in Längsrichtung verschiebbar angeordnet. Sie weist auf der der Aufnahme 10 zugewandten Seite Pressmittel 24 auf. Diese sind als Querschnittserweiterungen 26 der Stützhülse 14 ausgebildet, wobei der Querschnitt der Stützhülse 14 von der distalen Seite zur proximalen Seite zunächst keilförmig auf einer Schräge 28 zunimmt und sich dann abrupt auf einen zylindrischen Querschnittsbereich 30 verjüngt. Die Stützhülse 14 weist auch eine radial nach außen weisende Nase 31 auf, welche sich durch den Führungsbereich 23 des Grundkörpers 8 bis in den radialen Bereich des Spannrings 12 erstreckt.

Der Spannring 12 umgreift den Grundkörper 8 und ist in axialer Richtung drehbar. Auf der dem Grundkörper 8 zugewandten Seite weist der Spannring 12 Nocken 32 mit jeweils einer auf einer Seite in axialer Richtung vorgesehenen Schräge 34 auf, so dass sich der Innenquerschnitt des Spannrings 12 im Bereich dieser Schräge 34 stetig weiter verjüngt und dann eine konstante Verjüngung aufweist. Der Spannring weist weiterhin einen Bereich 36 mit einer schräg zur axialen Richtung verlaufenden Kontur 38 auf. Am Spannring 12 und am Grundkörper 8 sind weiterhin Ansätze 40, 42 für ein Presswerkzeug (nicht gezeigt) vorgesehen, so dass der Spannring 12 mit dem Presswerkzeug in die zweite bzw. dritte Position relativ zum Grundkörper 8 bewegt werden kann.

In Fig. 1 ist der Spannring 12 in der ersten Position relativ zum Grundkörper 8 angeordnet. In dieser Position liegen die Nocken 32 des Spannrings und die Erhebungen 22 des Fixierrings 16 an verschiedenen axialen Positionen. Der Fixierring 16 ist daher in seinem Querschnitt nicht reduziert, so dass das Rohrende 4 des Rohres 6 einfach in den Grundkörper 8 eingeführt werden kann. Weiterhin ist die Nase 31 der Stützhülse 14 in dieser Position des Spannrings 12 im proximalen Bereich des Führungsbereichs 23 angeordnet, so dass sich die Stützhülse 14 in einer zurückgezogenen Position befindet.

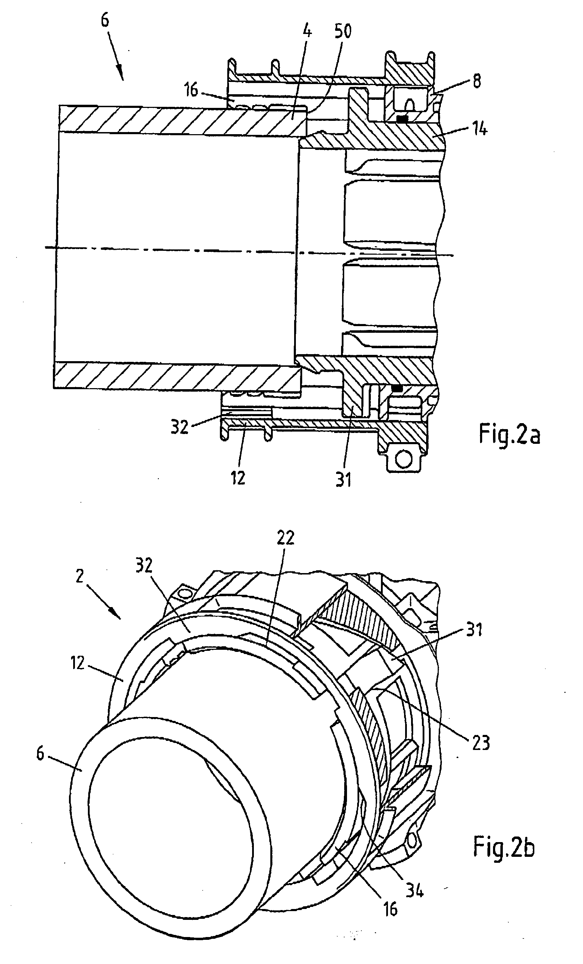

In Fig. 2 ist der Rohrverbinder aus Fig. 1 gezeigt, wobei sich der Spannring 12 in der zweiten Position relativ zum Grundkörper 8 befindet. In Fig. 2a sind der Rohrverbinder 2 und das Rohr 6 im Querschnitt und in Fig. 2b in perspektivischer Ansicht dargestellt. Vor der Bewegung des Spannrings 12 von der ersten in die zweite Position wird das Rohr 6 in den Grundkörper 8 so weit eingeführt, bis sich das Rohrende 4 mit einer am Grundkörper vorgesehenen Anlagefläche 50 in Anlage befindet. Bei der Drehung des Spannrings 12 von der ersten Position in die zweite Position nähern sich außerdem die Nocken 32 des Spannrings 12 in axialer Richtung den Erhebungen 22 des Fixierrings 16. Beim Erreichen der zweiten Position des Spannrings 12 überlappen die Nocken 32 dann, wie in Fig. 2b gezeigt, axial mit den Erhebungen 22, so dass durch die Nocken 32 eine in radialer Richtung wirkende Kraft auf den Fixierring 16 ausgeübt wird. Der Querschnitt des Fixierrings 16 wird durch diese Kraft reduziert, so dass das Rohrende 4 durch den Fixierring 16 in Längsrichtung durch eine kraft- und/oder formschlüssige Verbindung fixiert wird. Die Verzahnungen 20 können sich teilweise in das Wandmaterial des Rohres 6 eingraben oder eindrücken und so zu einer zusätzlichen kraft- und/oder formschlüssigen Verbindung führen. Die zur Bewegung des Spannrings 12 erforderliche Kraft wurde durch die Schräge 34 der Nocken 32 verringert. Die Nase 31 der Stützhülse 14 ist auch in der zweiten Position des Spannrings 12 im proximalen Bereich des Führungsbereichs 23 angeordnet, so dass sich die Stützhülse 14 in einer zurückgezogenen Position befindet.

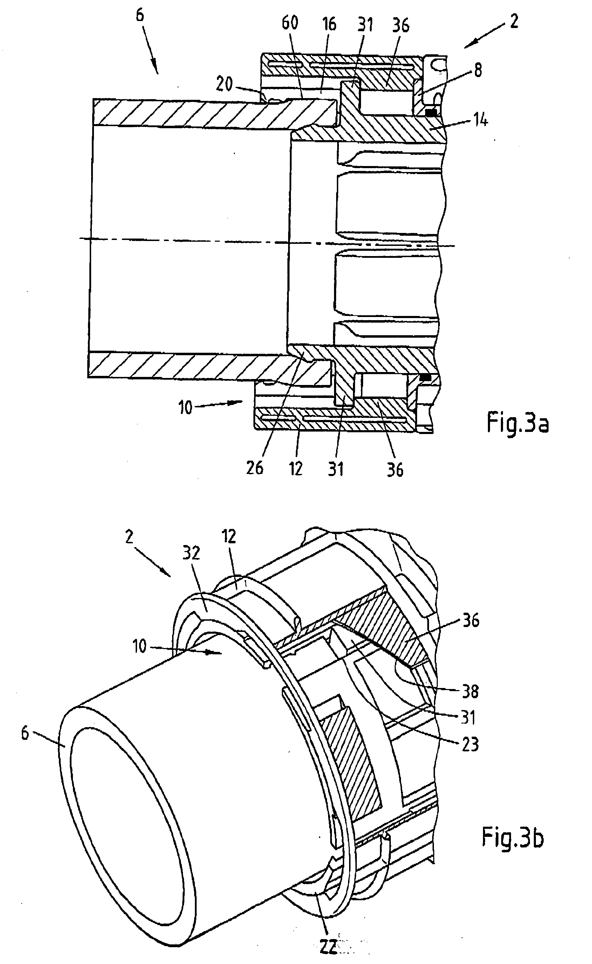

Fig. 3 zeigt den Rohrverbinder aus Fig. 1, wobei sich der Spannring 12 in der dritten Position relativ zum Grundkörper 8 befindet. In Fig. 3a sind der Rohrverbinder 2 und das Rohr 6 im Querschnitt und in Fig. 3b in perspektivischer Ansicht dargestellt. Bei der Drehung des Spannrings 12 von der zweiten Position in die dritte Position relativ zum Grundkörper 8 trat die Nase 31 der Stützhülse 14 mit der Kontur 38 des Bereichs 36 des Spannrings 12 in Kontakt und glitt an dieser entlang. Dadurch bewegte sich die Nase 31 in dem Führungsbereich 23 sowie die Stützhülse 14 in Richtung der Aufnahme 10. Um ein Verkippen der Stützhülse 14 zu verhindern, können, wie in Fig. 3a beispielhaft gezeigt, auch mehrere Nasen 31, Führungsbereiche 23 und Bereiche 36 vorgesehen sein. Durch die Längsbewegung der Stützhülse 14 wird diese mit dem Rohr 6 verpresst, indem sich die Querschnittserweiterungen 26 in die Innenseite des Rohres 6 einformen. Im dargestellten Beispiel wird das Rohr 6 dadurch so stark aufgeweitet, dass sich an der Außenseite des Rohres 6 eine Aufweitung 60 ausbildet, welche mit dem Fixierring 16, insbesondere mit den Verzahnungen 20 eine kraft- und/oder formschlüssige Verbindung eingeht. Die Nocken 32 des Spannrings 12 überlappen in der dritten Position des Spannrings 12 weiterhin mit den Erhebungen 22 des Fixierrings 16, so dass das Rohr 6 durch den Fixierring 16 auch in dieser Position in Längsrichtung fixiert ist.

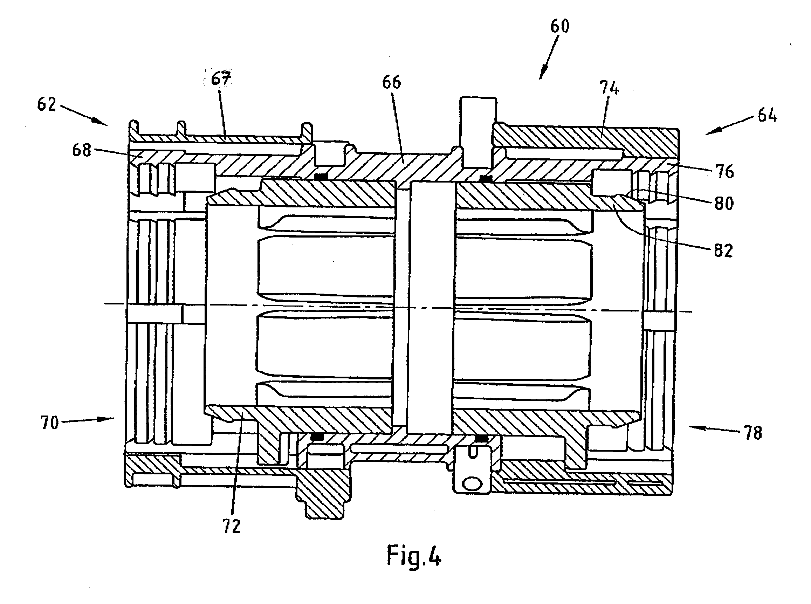

Fig. 4 zeigt ein zweites Ausführungsbeispiel eines erfindungsgemäßen Rohrverbinders. Der dargestellte Doppelrohrverbinder 60 weist einen ersten Rohrverbinder 62 und einen zweiten Rohrverbinder 64 auf, welche über einen gemeinsamen Grundkörper 66 miteinander verbunden sind. Mit dem Doppelrohrverbinder 60 können zwei Rohre (nicht gezeigt) aneinander angeschlossen werden. Der Doppelrohrverbinder 60 ist so ausgebildet, dass zwei Rohre mit gleichem Durchmesser verbunden werden können. Alternativ können die Rohrverbinder 62, 64 auch auf beliebige verschiedene Rohrdurchmesser angepasst werden. Der Rohrverbinder 62 ist mit einem in erster Position angeordneten Aktuatorelement 67 dargestellt, so dass die Fixierungsmittel 68 das Einführen eines Rohres in die Aufnahme 70 erlauben und die Stützhülse 72 in zurückgezogener Position angeordnet ist. Der Rohrverbinder 64 ist hingegen mit einem in dritter Position angeordneten Aktuatorelement 74 dargestellt, so dass die Fixierungsmittel 76 ein in die Aufnahme 78 des Rohrverbinders 64 eingeführtes Rohrende (nicht gezeigt) in Längsrichtung fixieren und die Pressmittel 80 der Stützhülse 82 mit dem Rohrende verpresst sind.

Natürlich ist die Anwendung des erfindungsgemäßen Rohrverbinders nicht auf Doppelrohrverbinder beschränkt, sondern erstreckt sich auf alle Einsatzmöglichkeiten von Rohrverbindern, bevorzugt zur Verbindung von Rohren mit einem Durchmesser von 63 mm bis 225 mm oder mehr, insbesondere von 90 mm bis 160 mm.

## Patentansprüche

1. Rohrverbinder (2, 62, 64) zum dichten Verbinden an ein Rohrende (4) eines Rohres (6) aus nachgiebigem Werkstoff, insbesondere eines Kunststoffrohres,
- mit einem eine Aufnahme (10, 70, 78) für ein Rohrende (4) aufweisenden Grundkörper (8, 66) und
- mit einem separaten Aktuatorelement (12, 66, 74),
- wobei der Grundkörper (8, 66) im Bereich der Aufnahme (10, 70, 78) Fixierungsmittel (16, 68, 76) zur Fixierung des Rohrendes (4) in Längsrichtung aufweist,
- wobei das Aktuatorelement (12, 67, 74) mindestens drei Positionen relativ zum Grundkörper (8, 66) einnehmen kann,
- wobei die Fixierungsmittel (16, 68, 76) in der ersten Position des Aktuatorelements (12, 67, 74) eine Längsbewegung des Rohrendes (4) ermöglichen und
- wobei die Fixierungsmittel (16, 68, 76) in der zweiten und dritten Position des Aktuatorelements (12, 67, 74) das Rohrende (4) in Längsrichtung fixieren,
- wobei eine separate, im Grundkörper (8, 66) angeordnete Stützhülse (14, 72, 82) vorgesehen ist,
- wobei die Stützhülse (14, 72, 82) Pressmittel (24, 80) zur Verpressung mit dem Rohrende (4) aufweist,
- wobei die Pressmittel (24, 80) in der ersten und zweiten Position des Aktuatorelements (12, 67, 74) unverpresst sind und
- wobei die Pressmittel (24, 80) in der dritten Position des Aktuatorelements (12, 67, 74) mit dem Rohrende (4) verpresst sind,
**dadurch gekennzeichnet,**
**dass** die Stützhülse (14, 72, 82) und/oder das Aktuatorelement (12, 67, 74) so ausgebildet sind, dass bei einer Bewegung des Aktuatorelements (12, 67, 74) von der zweiten in die dritte Position die Stützhülse (14, 72, 82) gegenüber dem Grundkörper (8, 66) in das Rohrende (4) hinein bewegt wird.

2. Rohrverbinder nach Anspruch 1,
**dadurch gekennzeichnet,**
**dass** das Aktuatorelement als drehbarer Spannring (12) ausgebildet ist.

3. Rohrverbinder nach Anspruch 2,
**dadurch gekennzeichnet,**
**dass** der Spannring (12) einen ersten Bereich (36) aufweist und die Stützhülse (14, 72, 82) einen dazu korrespondierenden zweiten Bereich aufweist, wobei einer dieser Bereiche eine zumindest abschnittsweise schräg zur axialen Richtung verlaufende Kontur (38) aufweist und der andere Bereich eine mit der Kontur (38) in Kontakt stehende Nase (31) aufweist.

4. Rohrverbinder nach Anspruch 2 oder 3,
**dadurch gekennzeichnet,**
**dass** der Spannring (12) auf der dem Grundkörper (8, 66) zugewandten Seite Nocken (32) aufweist, welche bei einer Bewegung des Spannrings (12) von der ersten in die zweite Position so mit den Fixierungsmitteln (16, 68, 76) zusammen wirken, dass die Fixierungsmittel (16, 68, 76) aktiviert werden.

5. Rohrverbinder nach einem der Ansprüche 1 bis 4,
**dadurch gekennzeichnet,**
**dass** die Fixierungsmittel des Grundkörpers (8, 66) als Fixierring (16), vorzugsweise mit Verzahnungen (20), ausgebildet sind.

6. Rohrverbinder nach einem der Ansprüche 1 bis 5,
**dadurch gekennzeichnet,**
**dass** die Pressmittel (24, 80) als zumindest abschnittsweise Querschnittserweiterung (26) der Stützhülse (14, 72, 82) ausgebildet sind, wobei der Querschnitt bevorzugt von der distalen Seite zur proximalen Seite der Stützhülse (14, 72, 82) stetig zunimmt.

7. Rohrverbinder nach einem der Ansprüche 1 bis 6,
**dadurch gekennzeichnet,**
**dass** der Grundkörper (8, 66) und das Aktuatorelement (12) Ansätze (40, 42) für ein Presswerkzeug aufweisen.

8. System,
mit einem Rohrverbinder (2, 62, 64) nach einem der Ansprüche 1 bis 7 und einem zu dem Rohrverbinder (2, 62, 64) korrespondierenden Rohr (6).

9. Verfahren zum Verbinden eines Rohrverbinders (2, 62, 64), vorzugsweise eines Rohrverbinders (2, 62, 64) nach einem der Ansprüche 1 bis 7, mit einem Rohr,
- bei dem das Rohr (6) zunächst in den Rohrverbinder (2, 62, 64) eingeführt wird,
- bei dem ein am Rohrverbinder (2, 62, 64) vorgesehenes Aktuatorelement (12, 67, 74) von einer ersten in eine zweite Position bewegt und das Rohr (6) dadurch im Rohrverbinder (2, 62, 64) in Längsrichtung fixiert wird,
- bei dem das Aktuatorelement (12, 67, 74) danach von der zweiten in eine dritte Position bewegt und dadurch das Rohr durch eine Stützhülse (14, 72, 82) mit Pressmitteln (24, 80) im Rohrverbinder (2, 62, 64) verpresst wird,
- wobei bei einer Bewegung des Aktuatorelements (12, 67, 74) von der zweiten in die dritte Position die Stützhülse (14, 72, 82) gegenüber dem Rohrverbinder (2, 62, 64) in das Rohrende (4) hinein bewegt wird.

10. Verwendung eines Rohrverbinders (2, 62, 64) nach einem der Ansprüche 1 bis 7 im erdverlegten Rohrleitungsbau, insbesondere für Kaltwasser- und/oder Gas-Leitungen.

## Claims

1. Pipe connector (2, 62, 64) for sealed connection to a pipe end (4) of a pipe (6) made of resilient material, in particular a plastic pipe,
- with a base body (8, 66) having a receptacle (10, 70, 78) for a pipe end (4) and
- with a separate actuator element (12, 66, 74),
- wherein the base body (8, 66) in the area of the receptacle (10, 70, 78) has fixing means (16, 68, 76) for fixing the pipe end (4) in the longitudinal direction,
- wherein the actuator element (12, 67, 74) can take at least three positions relative to the base body (8, 66),
- wherein the fixing means (16, 68, 76) in the first position of the actuator element (12, 67, 74) allow a longitudinal movement of the pipe end (4) and
- wherein the fixing means (16, 68, 76) in the second and third positions of the actuator element (12, 67, 74) fix the pipe end (4) in the longitudinal direction,
- wherein a separate support sleeve (14, 72, 82) disposed in the base body (8, 66) is provided,
- wherein the support sleeve (14, 72, 82) has pressing means (24, 80) for pressing together with the pipe end (4),
- wherein the pressing means (24, 80) in the first and second positions of the actuator element (12, 67, 74) are not pressed together and
- wherein the pressing means (24, 80) in the third position of the actuator element (12, 67, 74) are pressed together with the pipe end (4),
**characterised in that** the support sleeve (14, 72, 82) and/or the actuator element (12, 67, 74) are designed such that as the actuator element (12, 67, 74) moves from the second to the third position the support sleeve (14, 72, 82), in relation to the base body (8, 66), is moved into the pipe end (4).

2. Pipe connector according to claim 1, **characterised in that** the actuator element takes the form of a rotatable clamping ring (12).

3. Pipe connector according to claim 2, **characterised in that** the clamping ring (12) has a first area (36) and the support sleeve (14, 72, 82) has a corresponding second area, wherein one of these areas has a contour (38) that at least in sections runs inclined to the axial direction and the other area has a nose (31) in contact with the contour (38).

4. Pipe connector according to claim 2 or 3, **characterised in that** the clamping ring (12) has cams (32) on the side facing the base body (8, 66), which, when the clamping ring (12) moves from the first to the second position, interact with the fixing means (16, 68, 76) so that the fixing means (16, 68, 76) are activated.

5. Pipe connector according to one of claims 1 to 4, **characterised in that** the fixing means of the base body (8, 66) take the form of a fixing ring (16), preferably with teeth (20).

6. Pipe connector according to one of claims 1 to 5, **characterised in that** the pressing means (24, 80) take the form of an expansion in the cross-section (26) of the support sleeve (14, 72, 82), at least in sections, wherein the cross-section preferably expands continuously from the distal side to the proximal side of the support sleeve (14, 72, 82).

7. Pipe connector according to one of claims 1 to 6, **characterised in that** the base body (8, 66) and the actuator element (12) have lugs (40, 42) for a pressing tool.

8. System, with a pipe connector (2, 62, 64) according to one of claims 1 to 7 and a pipe (6) corresponding to the pipe connector (2, 62, 64).

9. Method for connecting a pipe connector (2, 62, 64), preferably a pipe connector (2, 62, 64) according to one of claims 1 to 7, with a pipe,
- in which the pipe (6) is initially introduced into the pipe connector (2, 62, 64),
- in which an actuator element (12, 67, 74) provided on the pipe connector (2, 62, 64) is moved from a first to a second position, and the pipe (6) as a result is fixed in the longitudinal direction
- in which the actuator element (12, 67, 74) then is moved from the second to a third position and as a result the pipe is pressed together by a support sleeve (14, 72, 82) with pressing means (24, 80) in the pipe connector (2, 62, 64),
- wherein when the actuator element (12, 67, 74) moves from the second to the third position, the support sleeve, in relation to the pipe connector (2, 62, 64), is moved into the pipe end (4).

10. Use of a pipe connector (2, 62, 64) according to one of claims 1 to 7 in underground pipeline construction, in particular for cold water and/or gas pipelines.

## Revendications

1. Raccord de tuyau destiné à raccorder de manière étanche une extrémité de tube (4) d'un tube (6) en matière flexible, en particulier d'un tube en matière synthétique,
- avec un corps de base (8, 66), qui est doté d'un réceptacle (10, 70, 78) pour une extrémité de tube (4), et
- avec un élément d'actionneur (12, 67, 74) séparé,
- sachant que, dans la région du réceptacle (10, 70, 78), le corps de base (8, 66) est doté de moyens de fixation (16, 68, 76) destinés à fixer l'extrémité de tube (4) dans la direction longitudinale,
- sachant que l'élément d'actionneur (12, 67, 74) peut occuper au moins trois positions par rapport au corps de base (8, 66),
- sachant que, dans la première position de l'élément d'actionneur (12, 67, 74), les moyens de fixation (16, 68, 76) permettent un déplacement longitudinal de l'extrémité de tube (4),
- sachant que, dans la deuxième position et la troisième position de l'élément d'actionneur (12, 67, 74), les moyens de fixation (16, 68, 76) fixent l'extrémité de tube (4) dans la direction longitudinale,
- sachant qu'est prévue une douille de support (14, 72, 82) séparée, qui est disposée dans le corps de base (8, 66),
- sachant que la douille de support (14, 72, 82) est dotée de moyens de pression (24, 80) destinés à la compression de l'extrémité de tube (4),
- sachant que les moyens de pression (24, 80) ne sont pas pressés dans la première et la deuxième position de l'élément d'actionneur (12, 67, 74) et
- sachant que les moyens de pression (24, 80) sont compressés avec l'extrémité de tube (4) dans la troisième position de l'élément d'actionneur (12, 67, 74),
**caractérisé en ce que** la douille de support (14, 72, 82) et / ou l'élément d'actionneur (12, 67, 74) sont conçus de telle sorte que, lors d'un déplacement de l'élément d'actionneur (12, 67, 74) de la deuxième position à la troisième position, la douille de support (14, 72, 82) est déplacée par rapport au corps de base (8, 66) à l'intérieur de l'extrémité de tube (4).

2. Raccord de tuyau selon la revendication 1, **caractérisé en ce que** l'élément d'actionneur est réalisé sous la forme d'un anneau de serrage rotatif (12).

3. Raccord de tuyau selon la revendication 2, **caractérisé en ce que** l'anneau de serrage (12) est doté d'une première section (36) et que la douille de support (14, 72, 82) est dotée d'une deuxième section correspondant à celle-ci, sachant que l'une de ces sections est dotée d'un contour (38) qui, au moins par sections, s'étend obliquement par rapport à la direction axiale, et que l'autre section est dotée d'un nez (31) qui est en contact avec le contour (38).

4. Raccord de tuyau selon revendication 2 ou 3, **caractérisé en ce que**, sur la face dirigée vers le corps de base (8, 66), l'anneau de serrage (12) est doté de cames (32) qui, lors d'un déplacement de l'anneau de serrage (12), de la première à la deuxième position, coopèrent avec les moyens de fixation (16, 68, 76) de telle sorte que lesdits moyens de fixation (16, 68, 76) sont activés.

5. Raccord de tuyau selon l'une des revendications 1 à 4,
**caractérisé en ce que** les moyens de fixation du corps de base (8, 66) présentent la forme d'un anneau de fixation (16), de préférence pourvu de dentures (20).

6. Raccord de tuyau selon l'une des revendications 1 à 5,
**caractérisé en ce que** les moyens de pression (24, 80) sont formés des élargissements (26) au moins partiels de la coupe transversale de la douille de support (14, 72, 82), sachant que ladite section transversale augmente en continu, de préférence du côté distal vers le côté proximal de la douille de support (14, 72, 82).

7. Raccord de tuyau selon l'une des revendications 1 à 6,
**caractérisé en ce que** le corps de base (8, 66) et l'élément d'actionneur (12) sont dotés de tétons (40, 42) pour un outil de pression.

8. Système doté d'un raccord de tuyau ((2, 62, 64) selon l'une des revendications 1 à 7 et d'un tuyau (6) qui correspond au raccord de tuyau (2, 62, 54).

9. Procédé de raccordement d'un raccord de tuyau ((2, 62, 64), de préférence d'un raccord de tuyau ((2, 62, 64) selon l'une des revendications 1 à 7, à un tuyau,
- dans lequel le tuyau (6) est d'abord inséré dans le raccord de tuyau ((2, 62, 64),
- dans lequel un élément d'actionneur (12, 67, 74), prévu sur le raccord de tuyau (2, 62, 64), est déplacé d'une première position à une deuxième position et le tuyau (6) étant ainsi fixé dans le raccord de tuyau ((2, 62, 64), dans la direction longitudinale,
- dans lequel l'élément d'actionneur (12, 67, 74) est ensuite déplacé de la deuxième position à la troisième position et le tuyau étant ainsi pressé dans le raccord de tuyau (2, 62, 64) par une douille de support (14, 72, 82) dotée de moyens de pression (24, 80),
- sachant que, lors d'un déplacement de l'élément d'actionneur (12, 67, 74) de la deuxième à la troisième position, la douille de support (14, 72, 82) est déplacée par rapport au raccord de tuyau (2, 62, 64) à l'intérieur de l'extrémité de tube (4).

10. Utilisation d'un raccord de tuyau ((2, 62, 64) selon l'une des revendications 1 à 7 dans la construction de tuyauterie installée sous la terre.
